# EUROPÄISCHE PATENTSCHRIFT

(11) **EP 1 137 718 B1**
(45) Veröffentlichungstag und Bekanntmachung des Hinweises auf die Patenterteilung: **17.12.2003**
(21) Anmeldenummer: 00965916.0
(22) Anmeldetag: 04.09.2000
(51) Int. Cl.: C09C 3/06, C09C 3/08, C09C 3/10, C09C 3/12, B22F 1/00, C22C 33/02, B22F 3/02

(54) **OBERFLÄCHENMODIFIZIERTES MANGANSULFID, VERFAHREN ZU DESSEN HERSTELLUNG SOWIE DESSEN VERWENDUNG**
SURFACE-MODIFIED MANGANESE SULFIDE, METHOD FOR PRODUCING THE SAME AND USE THEREOF
SULFURE MANGANEUX A SURFACE MODIFIEE, SON PROCEDE DE PRODUCTION ET SON UTILISATION

(30) Priorität: 10.09.1999 DE 19943510
(43) Veröffentlichungstag der Anmeldung: 04.10.2001
(73) Patentinhaber: Chemetall Ges.m.b.H., 1010 Wien (AT)
(72) Erfinder: HÜNER, Ronald, A-9500 Villach (AT)
(74) Vertreter: Viering, Jentschura & Partner
(86) Internationale Anmeldenummer: EP0008626
(87) Internationale Veröffentlichungsnummer: WO01019929

(56) Entgegenhaltungen:
- EP-A- 0 183 666
- EP-A- 0 264 287
- EP-A- 0 900 856
- US-A- 4 483 905
- US-A- 5 698 005
- US-A- 5 768 678

## Beschreibung

Die Erfindung betrifft oberflächenmodifiziertes Mangansulfid, ein Verfahren zu dessen Herstellung sowie die Verwendung des oberflächenmodifizierten Mangansulfids als Presshilfsmittel sowie als Zusatzstoff beim Sintern von Formteilen. Darüber hinaus betrifft die vorliegende Erfindung ein Sinterpulver, das einen Gehalt des oberflächenmodifizierten Mangansulfids enthält, ein Verfahren zur Herstellung eines Formlings unter Verwendung des erfindungsgemäßen Sinterpulvers sowie ein durch das Verfahren erhältliches Formteil.

Die maschinelle, insbesondere spanende Bearbeitung von gesinterten Formteilen ist aufgrund des Werkzeugverschleißes oft recht schwierig und wird durch die Zugabe von Sulfiden erleichtert. Als besonders geeigneter Zusatzstoff für das Sintern hat sich Mangansulfid (MnS) erwiesen, da es wegen seiner thermischen Stabilität ohne thermische Zersetzung am Sinterprozeß teilnehmen kann. Hierzu muß das Mangansulfid in möglichst feinverteilter Form in das Sinterpulver eingebracht werden. So wird im US Patent 3,705,020 eine Partikelgröße des Mangansulfids von 10 bis 100 µm, vorzugsweise 30 bis 40 µm genannt und gemäß der europäischen Patentanmeldung EP 0 183 666 beträgt die Partikelgröße 10 µm oder weniger. Eine geringe Partikelgröße ermöglicht eine homogenerer Einmischung des Sulfides und die Fertigung mechanisch stabilerer Formteile. Insbesondere wird die Ausbildung von Rissen gemindert.

Die geringe Partikelgröße und die damit einhergehende große Oberfläche des Mangansulfids begünstigt allerdings seine Reaktion an, insbesondere, feuchter Luft zu MnO, MnO₂ und MnSO₄ und damit auch die Verklumpung zu größeren Partikel oder Agglomeraten. Dieses Verhalten bedingt nicht nur Probleme bei der Lagerung, sondern bei der Verwendung des Mangansulfids als Sinteradditiv führt die Verklumpung dann zu Gefügeschwächung in den fertigen Formteilen. Insbesondere bei mechanischer und thermischer Belastung folgt dann die Ausbildung von Rissen und die Zerstörung des Formteils.

Im US Patent 5,768,678 wird nun vorgeschlagen, zur Vermeidung der Oxidation des Mangansulfids eine spezielle mangansulfidhaltige Zusammensetzung als Sinterzusatz zu verwenden. Diese Zusammensetzung wird dabei aus einer Mischung von 50-65 Gew-% Mangan, 30-38 Gew.-% Schwefel und 5-25% Gew.-% Eisen hergestellt und zu dem zu sinternden Metallpulver in einer Menge von 0,2-2,0 Gew.-% zugegeben. Der Oxidationsschutz wird diesem Patent zufolge dabei durch das Eisen, das in nichtoxidierter Form vorliegen soll, vermittelt. Nachteilig an dem Sinterzusatz der US 5,768,678 ist jedoch, dass dieser zusätzliches wirkungsloses Eisensulfid enthält und des weiteren eine Oberflächenreaktion lediglich vermindert aber nicht vermieden werden kann. Ein weiterer Nachteil dieses Sinterzusatzes ist seine aufwendige Herstellung.

Die europäische Patentanmeldung EP-A1-0900856 beschreibt ein Sintermaterial und dessen Herstellung aus rostfreiem Stahl und einem Zusatz von 2,5 - 30 Gew.-% Mangansulfid. Als Vorteil wird eine verbesserte Verschleißcharakteristik bei hoher Temperatur genannt. Das Problem der Verklumpungsneigung und damit einer geringen Lagerfähigkeit des Mangansulfids wird darin nicht erwähnt.

Es besteht daher ein Bedarf an lagerfähigem und leicht erhältlichem Mangansulfid. Die Aufgabe der vorliegenden Erfindung ist es daher, ein derartiges Mangansulfid bereitzustellen, dass die im Stand der Technik bekannten Merkmale nicht aufweist.

Überraschenderweise wurde von den Erfindern gefunden, dass ein solches Mangansulfid erhalten werden kann, dadurch dass pulverförmiges Mangansulfid vorgelegt wird, ein Beschichtungsmittel, das aus einem Wachs, einem Ester einer anorganischen oder organischen Säure oder einem Polymer mit niedrigem Schmelzpunkt oder Mischungen davon ausgewählt wird, in einer Menge von 0,01 bis 10 Gew.-%. bezogen auf das Gewicht des eingesetzten Mangansulfids, zugegeben wird und die Mischung über einen Zeitraum, der ausreichend bemessen ist, eine homogene Mischung zu gewährleisten, vermischt wird.

Dabei haben die Untersuchungen der Erfinder ergeben, dass der Oxidationsschutz und die Verringerung der Feuchtigkeitsaufnahme des ansonsten hygroskopischen Materials und die daraus resultierende Agglomeration überraschenderweise schon durch geringe Mengen des Beschichtungsmittel verhindert werden kann.

Erfindungsgemäß wird bei der Herstellung des beschichteten Mangansulfid eine Menge an Beschichtungsmittel von 0,01 Gew.-% bis 10 Gew.-%, vorzugsweise von 0,01 bis 5,0 Gew.-%, besonders bevorzugt, von 1,0 bis 3,0 Gew.-%, bezogen auf das Gewicht des Mangansulfids eingesetzt.

Die Beschichtung wird in Abhängigkeit vom Schmelzpunkt des Beschichtungsmittels im allgemeinen bei einer Temperatur von 20°C bis 150°C durchgeführt. Je nach verwendetem Beschichtungsmittel kann jedoch auch bei einer Temperatur um den Gefrierpunkt (0°C) gearbeitet werden. Vorzugsweise wird bei Raumtemperatur gearbeitet, da dann der Mischer nicht beheizt werden muß. Das Mischen wird üblicherweise für eine Zeitdauer von 1 min bis 60 min, vorzugsweise für 5 min bis 20 min, durchgeführt.

Überraschenderweise ist das auf diese Art erhaltene Mangansulfid direkt gebrauchsfertig, d.h. es muß weder für die Lagerung oder noch seine Verwendung weiteren Behandlungsschritten wie einer Trocknung unterworfen werden.

Neben der Verwendung als Sinterzusatz zur Verbesserung der Verarbeitbarkeit von Sinterformteilen wurde im Rahmen der vorliegenden Erfindung festgestellt, dass sich das erfindungsgemäß oberflächenmodifizierte Mangansulfid als schmierendes Presshilfsmittel erweist und es deshalb generell als Additiv zur Verbesserung der Verpresseigenschaften eingesetzt werden kann. Eine weitere vorteilhafte Eigenschaft des erfindungsgemäßen Mangansulfids, die sich gerade im Zusammenhang mit seiner Lagerung und Verwendung als günstig erweist, ist seine Staubfreiheit.

Die Beschichtung des Mangansulfid kann auf jede dem Fachmann bekannte Art durchgeführt werden. Das Beschichtungsmittel kann in einer konventionellen Mischvorrichtung wie einem Pflugscharmischer oder Taumelmischer als ganzes oder in Intervallen zum Mangansulfid zugegeben werden. Es ist z.B. auch möglich, das Beschichtungsmittel in den Mischbehälter einzusprühen. Erfindungsgemäß kann jedes handelsübliche Mangansulfid, unabhängig von Reinheit oder Partikelgröße verwendet werden. Falls z.B. für die Verwendung als Sinteradditiv notwendig, wird das Mangansulfid vor der Beschichtung noch fein vermahlen, so dass es im allgemeinen eine durchschnittliche Partikelgröße, d.h. einen Durchmesser, von 1 bis 200 µm, vorzugsweise von 1 bis 10 µm, und besonders bevorzugt von ca. 5 bis 10 µm aufweist. Es ist jedoch in diesem Fall auch möglich, größere Partikel zu einzusetzen, solange diese beim späteren Sintern den Formkörpern noch eine ausreichende mechanische Stabilität verleihen.

Als Beschichtungsmaterialien werden erfindungsgemäß Verbindungen bevorzugt, die bei Raumtemperatur entweder flüssig sind oder einen relativ niedrigen Schmelzpunkt unterhalb von 150°C haben. Dadurch ist es, wie oben angedeutet, möglich, bei der Herstellung des erfindungsgemäßen Mangansulfids ganz ohne oder nur mit schwacher Beheizung des Mischer zu arbeiten.

Für die Verwendung des erfindungsgemäßen Mangansulfids als Sinteradditiv sollten die erfindungsgemäßen Beschichtungsmittel ferner einen Verdampfungspunkt bei Normaldruck unterhalb von 500°C, vorzugsweise im Bereich ca. 200 bis 300 °C haben und sich während des Aufwärmens der Sintermischung rückstandsfrei zersetzen oder verdampfen, da dadurch die Bildung von möglichen Verunreinigungen im gesinterten Formkörper verringert wird.

Erfindungsgemäß verwendete Beschichtungsmaterialien, die die vorstehend genannten physikalischen Eigenschaften aufweisen, sind vorzugsweise niedrigschmelzende Polymere, Öle einschließlich paraffinischer Öle und Silikonöle, Wachse, einem ein- bis mehrwertigen aliphatischem Alkohol mit 2 bis 12 Kohlenstoffatomen, organische und anorganische Ester, im letzteren Fall speziell Phosphorsäureester.

Unter Wachsen im Sinne der Erfindung werden zum einen die Ester höherer geradkettiger Fettsäuren wie Palmitinsäure, Hexaeicosansäure mit höheren geradkettigen, einwertigen Alkoholen wie Palmitylalkohol, Stearylalkohol oder Octadec-9-en-1-ol verstanden. Zum anderen werden als Wachse im Sinne der Erfindung auch diejenigen Stoffe verstanden, die meist natürlicher Herkunft sind, die teilweise oder überwiegend die vorstehend genannten Fettsäureester enthalten, und die oberhalb von etwa 30°C bis 40°C ohne Zersetzung in einen schmelzflüssigen, niederviskosen Zustand übergehen. Beispiel solcher Wachse sind Japanwachs, Lanolin oder Bienenwachs.

Weiterhin fallen unter den Begriff Wachse hier auch synthetische Polymere mit wachsartigem Charakter wie die sogenannten Polyolefinwachse. Beispiele für solche synthetischen Polymere, die in der vorliegenden Erfindung Anwendung finden, sind niedermolekulare Polyethylenglykole und Polypropylenglykole.

Unter Ölen werden in der vorliegenden Erfindung zum einen aliphatische Öle auf Mineralölbasis wie die paraffinischen Öle verstanden. Die aliphatischen Öle besitzen vorzugsweise eine Kettenlänge von 6 bis 20 Kohlenstoffatomen. Weiterhin umfaßt der Begriff Öl auch synthethische Öle wie die Siliconöle, wie sie dem Fachmann als Oberbegriff u.a. für klare, farblose, hydrophobe Flüssigkeiten mit Stockpunkten von ca. -80 bis -40 °C von linearen Polydimethylsiloxanen und Polymethylphenylsiloxanen bekannt sind.

Unter einem niedrigschmelzenden Polymer werden hier diejenigen Verbindungen verstanden, die aus Makromolekülen bestehen und einen Schmelzpunkt von unter 150°C und eine Verdampfungstemperatur von unterhalb von 500°C bei Normaldruck besitzen. Bevorzugte Vertreter dieser Verbindungsklasse sind Polyester, Polyamide und polyaliphatische Verbindungen.

Erfindungsgemäß können als Beschichtungsmittel auch Ester anorganischer oder organischen Säuren verwendet werden. Bevorzugte anorganische Säuren sind Phosphorsäure und Schwefelsäure, erfindungsgemäß können aber auch andere Säuren wie schweflige Säure, Kohlensäure,... verwendet werden. Als organische Säuren werden vorzugsweise Ameisensäure und niedere Carbonsäuren mit 2 bis 6 Kohlenstoffatomen wie z.B.
Essigsäure, eingesetzt. Als Esteralkohole werden sowohl aliphatische als auch aromatische Alkohole verwendet. Die aliphatische Alkohole weisen vorzugsweise eine Kettenlänge von 1 bis 20 C-Atomen auf. Bevorzugte aromatische Alkohole sind die Phenole. Diese können mehrere Hydroxylgruppen oder mehrere aliphatische Substituenten mit einer Kettenlänge von vorzugsweise ein bis sechs C-Atomen aufweisen.

Unter einem ein- bis mehrwertigen aliphatischem Alkohol mit 2 bis 12 Kohlenstoffatomen wird erfindungsgemäß ein solcher Alkohol verstanden, der sich aufgrund seiner Verdampfungs- und Entflammbarkeitseigenschaften für den Einsatz in dem erfindungsgemäßen Verfahren eignet.

Als weitere Beschichtungsmittel sind auch aromatische Verbindungen wie Biphenyl etc, geeignet, solange diese Verbindungen, wie auch die übrigen erfindungsgemäß verwendbaren Beschichtungsmittel, sich durch ein rußarmes und rückstandfreies Abdampfen auszeichnen.

Eine bevorzugte Klasse von erfindungsgemäß eingesetzten Beschichtungsmaterialen sind (niederviskose) Ester der Phosphorsäure, insbesondere diejenigen mit längerkettigen aliphatischen Alkoholen mit Kettenlängen zwischen 3 und 15 C-Atomen vorzugsweise 6 bis 13 C-Atomen sowie mit Phenolen oder anderen aromatischen Alkoholen mit Seitenketten von 1 bis 12 C-Atomen, vorzugsweise 1 bis 3 C-Atomen wie Kresole. Diese Verbindungen sind dem Fachmann auch als Weichmacher bekannt. Beispiele solcher Verbindungen sind Tris-(2-ethylhexyl)-phosphat, Tris(2-butoxyethyl)-phosphat, Triphenylphosphat oder Diphenylkresylphosphat. Diphenylkresylphosphat ist ein besonders geeigneter Vertreter dieser Verbindungsklasse, da es untoxisch, bei Raumtemperatur flüssig sowie niederviskos ist, bei ca. 230 °C verdampft und zudem rußfrei verbrennt. Ein weiterer Vorteil von Diphenylkresylphosphat ist seine relativ temperaturunabhängige Viskosität.

Für den Einsatz als Sinterzusatz haben die Untersuchungen der Erfinder ergeben, dass ein derartig oberflächenmodifiziertes Mangansulfid die maschinelle, insbesondere die spanende Bearbeitung von gesinterten Formteilen verbessert, wenn es in ein Sinterpulver in der Menge von 0,1 Gew.-% bis 1,0 Gew.-%, vorzugsweise von 0,2 bis 0,6 Gew.-%, bezogen auf das Gewicht des Sinterpulvers, eingebracht wird.

Folglich richtet sich eine weitere Ausführungsform der vorliegenden Erfindung auch auf ein Sinterpulver, das durch einen Gehalt des erfindungsgemäßen Mangansulfids gekennzeichnet ist

Für die Verwendung als Zusatz beim Sintern wird das Mangansulfid vorzugsweise vor der Zugabe zu dem ausgewählten Metallpulver auf die oben geschilderte Art mit den erfindungsgemäßen Beschichtungsmitteln behandelt. Allerdings ist es im Rahmen der Erfindung auch möglich, zuerst unmodifiziertes Mangansulfid mit dem zu sinterenden Metallpulver zu vermischen und anschließend das Beschichtungsmittel zu der Sintermischung zu geben

Eine weitere Ausführungsform der vorliegenden Erfindung betrifft daher ebenfalls ein Verfahren zur Herstellung eines Formlings unter Verwendung des erfindungsgemäßen Sinterpulvers, wobei das Verfahren die folgenden Schritte umfaßt:
a) Verdichten des Sinterpulvers in einer Sinterform, die eine der Endkontur des fertigen Formteiles entsprechende Innenform besitzt;
b) Aufheizen der Grünlinge auf eine Temperatur oberhalb der Verdampfungstemperatur des zur Herstellung des Mangansulfides verwendeten Beschichtungsmittels, und, falls notwendig, Halten der Grünlinge bei dieser Temperatur über einen Zeitraum, der ausreicht, eine vollständige Verdampfung des Beschichtungsmittels zu gewährleisten;
c) Sintern der Grünlinge aus Schritt b);
d) Entnehmen der abgekühlten Formteile aus der Sinterform.

Eine weitere Ausführungsform umfaßt somit ein Formteil, das nach dem vorstehend erläuterten erfindungsgemäßen Herstellungs/Sinterverfahren erhältlich ist.

Die vorliegende Erfindung soll anhand eines nicht einschränkenden Beispiel näher veranschaulicht werden.

### Beispiel 1: Herstellung von oberflächenmodifiziertem Mangansulfid

Zu 2000 g Mangansulfid, das einen Korndurchmesser v on 4,96 µm (D50) aufwies, wurden 20 g flüssiges Diphenylkresylphosphat in einem Lödige-Mischer zugesetzt. Anschließend wurde der Ansatz bei 25°C für 20 min durchmischt.

### Bestimmung der Oxidationsbeständigkeit

Das in Beispiel 1 erhaltene, mit 1 % Diphenylkresylphosphat behandelte Mangansulfid wurde zusammen mit unbeschichtetem Mangansulfid gleichen Korndurchmessers, d.h. gemäß EP 0 183 666, (Beispiel 2) sowie einer Mangansulfidzusammensetzung gemäß US 5,768,678 (Beispiel 3) in einer Atmosphäre von 75% Luftfeuchtigkeit bei Raumtemperatur für 6 Tage gelagert. Anschließend wurde für jede Probe das Ausmaß der Oxidation des Mangansulfids an der Oberfläche zu MnO, MnO₂ und MnSO₄ (gemäß den schematischen Reaktionen MnS + H₂O => MnO; MnO₂; MnSO₄) durch Messung der Gewichtszunahme bestimmt (Tabelle 1).

**Tab. 1**

| Gewichtszunahme nach 6 Tagen | | | |
|---|---|---|---|
| Beispiel | Mangansulfid | Korngröße D50 (µm) | Gewichtszunahme (%) |
| 1 | Erfindungsgemäßes | 4,69 | 0,2 |
| | MnS | | |
| 2 | Unbeschichtetes | 4.49 | 25.8 % |
| | MnS | | |
| 3 | MnS mit 10 % FeS-Anteil | 7,98 | 11,1 |

Wie aus Tab. 1 ersichtlich ist, nimmt das erfindungsgemäß beschichtete Mangansulfid signifikant weniger Feuchtigkeit auf als das unbeschichtete Material oder die Mangansulfidzusammensetzung der US 5,768,678. Damit übereinstimmend ist das erfindungsgemäße Material nach 10 Wochen immer noch ein feines, rieselfähiges Pulver ohne Agglomerate, während sich das unbeschichtete Mangansulfid durch die Feuchtigkeitsaufnahme und Bildung von Braunstein in dieser Zeit zu einem grobkörnigen, dunklen Produkt verändert hat.

## Patentansprüche

1. Oberflächenbeschichtetes Mangansulfid, dadurch erhältlich, daß pulverförmiges Mangansulfid vorgelegt wird, ein Beschichtungsmittel, das vorzugsweise aus der Gruppe ausgewählt wird, die aus einem Wachs, einem Ester einer anorganischen oder organischen Säure, einem Öl, einem niedrigschmelzenden Polymer, einem ein- bis mehrwertigen aliphatischem Alkohol mit 2 bis 12 Kohlenstoffatomen oder Mischungen davon besteht, in einer Menge von 0,01 bis 10 Gew.-%, bezogen auf das Gewicht des eingesetzten Mangansulfides, zugegeben wird und die Mischung über einen Zeitraum, der ausreichend bemessen ist, eine homogene Mischung zu gewährleisten, vermischt wird.

2. Mangansulfid nach Anspruch 1, **dadurch gekennzeichnet, daß** das pulverförmige Mangansulfid eine Partikelgröße von 1 bis 200 µm, vorzugsweise 1 bis 10 µm aufweist.

3. Mangansulfid nach Anspruch 1 oder 2, **dadurch gekennzeichnet, daß** das niedrigschmelzende Polymer einen Schmelzpunkt unter 150°C aufweist und ein Polyester, Polyamid oder eine polyaliphatische Verbindung ist.

4. Mangansulfid nach Anspruch 1 und 2, **dadurch gekennzeichnet, daß** der Ester der anorganischen Säure ein Phosphorsäureester ist.

5. Mangansulfid nach Anspruch 4, **dadurch gekennzeichnet, daß** der Phosphorsäureester Diphenylkresylphosphat oder Triphenylphosphat ist.

6. Mangansulfid nach Anspruch 1 oder 2, **dadurch gekennzeichnet, daß** das Öl ein paraffinisches Öl oder ein Silikonöl ist.

7. Verfahren zur Herstellung von oberflächenbeschichtetem Mangansulfid (MnS), **dadurch gekennzeichnet, daß** pulverförmiges Mangansulfid vorgelegt wird, ein Beschichtungsmittel, das aus der Gruppe ausgewählt wird, die aus einem Wachs, einem Ester einer anorganischen oder organischen Säure, einem Öl, einem niedrigschmelzenden Polymer, einem ein- bis mehrwertigen aliphatischem Alkohol mit 2 bis 12 Kohlenstoffatomen oder Mischungen davon besteht, in einer Menge von 0,01 bis 10 Gew.-%, bezogen auf das Gewicht des eingesetzten Mangansulfides, zugegeben wird und die Mischung über einen Zeitraum, der ausreichend bemessen ist, eine homogene Mischung zu gewährleisten, vermischt wird.

8. Verfahren nach Anspruch 7, **dadurch gekennzeichnet, daß** das Mangansulfid eine Partikelgröße von 1 bis 200 µm, vorzugsweise von 1 bis 10 µm aufweist.

9. Verfahren nach Anspruch 7 oder 8, **dadurch gekennzeichnet, dass** das Beschichtungsmittel in einer Menge von 0,01 bis 5,0 Gew.-%, besonders bevorzugt von 1,0 bis 3,0 Gew.-%, bezogen auf das Gewicht des eingesetzten Mangansulfids, zugegeben wird.

10. Verfahren nach einem der Anspruch 7 bis 9, **dadurch gekennzeichnet, daß** der Ester der anorganischen Säure ein Phosphorsäurester ist.

11. Verfahren nach Anspruch 10, **dadurch gekennzeichnet, daß** der Ester der Phosphorsäure Diphenylkresylphosphat oder Triphenylphosphat ist.

12. Verwendung des Mangansulfids gemäß einem der Ansprüche 1 bis 6 als Additiv zur Verbesserung der Verpresseigenschaften von Pulvermischungen.

13. Verwendung des Mangansulfids gemäß einem der Ansprüche 1 bis 6 als Additiv zu Sinterpulvern zur Verbesserung der Verarbeitbarkeit des Sinterformteil.

14. Sinterpulver, **gekennzeichnet durch** einen Gehalt an Mangansulfid nach einem der Ansprüche 1-6.

15. Verfahren zur Herstellung eines Formlings unter Verwendung des Sinterpulvers nach Anspruch 14, das die folgenden Schritte umfaßt:
a) Verdichten des Sinterpulvers in einer Sinterform, die eine der Endkontur des fertigen Formteiles entsprechende Innenform besitzt;
b) Aufheizen der Grünlinge auf eine Temperatur oberhalb der Verdampfungstemperatur des zur Herstellung des Mangansulfides verwendeten Beschichtungsmittels, und, falls notwendig, Halten der Grünlinge bei dieser Temperatur über einen Zeitraum, der ausreicht, eine vollständige Verdampfung des Beschichtungsmittels zu gewährleisten;
c) Sintern der Grünlinge aus Schritt b);
d) Entnehmen der abgekühlten Formteile aus der Sinterform.

## Claims

1. Surface coated manganese sulfide, obtainable in that powdered manganese sulfide is provided, a coating agent, preferably selected from the group consisting of a wax, an ester of an inorganic or organic acid, an oil, a low-melting polymer, a mono- to multi-functional aliphatic alcohol with 2 to 12 carbon atoms or mixtures thereof, is added in an amount of 0.01 to 10 wt.% relative to the weight of the manganese sulfide used, and the mixture is mixed for a period of time which is sufficient to ensure a homogeneous mixture.

2. Manganese sulfide according to claim 1, **characterized in that** the powdered manganese sulfide has a particle size of 1 to 200 µm, preferably 1 to 10 µm.

3. Manganese sulfide according to claim 1 or 2, **characterized in that** the low melting polymer has a melting point under 150°C and is a polyester, polyamide or a polyaliphatic compound.

4. Manganese sulfide according to claim 1 and 2, **characterized in that** the ester of the inorganic acid is a phosphoric acid ester.

5. Manganese sulfide according to claim 4, **characterized in that** the phosphoric acid ester is diphenylcresylphosphate or triphenylphosphate.

6. Manganese sulfide according to claim 1 or 2, **characterized in that** the oil is a paraffinic oil or silicon oil.

7. Method for producing surface coated manganese sulfide (MnS), **characterized in that** powdered manganese sulfide is provided, a coating agent, selected from the group consisting of a wax, an ester of an inorganic or an organic acid, an oil, a low melting polymer, a mono- to multi-functional aliphatic alcohol with 2 to 12 carbon atoms or mixtures thereof, is added in an amount of 0.01 to 10 wt.% relative to the weight of the manganese sulfide used, and the mixture is mixed for a period of time which is sufficient to ensure a homogeneous mixture.

8. Method according to claim 7, **characterized in that** the manganese sulfide has a particle size from 1 to 200 µm, preferably from 1 to 10 µm.

9. Method according to claim 7 or 8, **characterized in that** the coating agent is added in an amount from 0.01 to 5.0 wt.%, especially preferably from 1.0 to 3.0 wt.%, relative to the weight of the manganese sulfide used.

10. Method according to any of the claims 7 to 9, **characterized in that** the ester of the inorganic acid is a phosphoric acid ester.

11. Method according to claim 10, **characterized in that** the ester of the phosphoric acid is diphenylcresylphosphate or triphenylphosphate.

12. Use of the manganese sulfide according to any of the claims 1 to 6 as an additive for improving the compression characteristics of powder mixtures.

13. Use of the manganese sulfide according to any of claims 1 to 6 as an additive to sinter powders for improving the processability of the molded sintered article.

14. Sinter powder, **characterized by** a content of manganese sulfide according to one of the claims 1-6.

15. Method for producing a molded article using the sinter powder according to claim 14, comprising the following steps:
a) compression of the sinter powder in a sinter mold having an inner shape corresponding to the final contour of the finished molded article;
b) heating the green compact to a temperature above the evaporation temperature of the coating agent used for production of the manganese sulfide and, if necessary, maintaining the green compact at this temperature for a period of time sufficient to ensure complete evaporation of the coating agent;
c) sintering the green compact of step b);
d) removing the cooled molded article from the sinter mold.

## Revendications

1. Sulfure de manganèse à surface revêtue obtenu en partant d'un sulfure de manganèse sous forme de poudre, en ajoutant, en une quantité de 0,01 à 10 % en poids sur la base du poids du sulfure de manganèse utilisé, un agent de revêtement choisi de préférence dans le groupe composé d'une cire, d'un ester d'un acide inorganique ou organique, d'un polymère à bas point de fusion, d'un alcool aliphatique monovalent à polyvalent à 2 à 12 atomes de carbone, ou de mélanges de ces derniers, et en mélangeant le mélange pendant une durée suffisante pour assurer un mélange homogène.

2. Sulfure de manganèse selon la revendication 1,
**caractérisé en ce que** le sulfure de manganèse présente une granulométrie de 1 à 200 µm, de préférence de 1 à 10 µm.

3. Sulfure de manganèse selon l'une quelconque des revendications 1 ou 2, **caractérisé en ce que** le polymère à bas point de fusion présente un point de fusion inférieur à 150° C, et est un polyester, un polyamide ou un composé polyaliphatique.

4. Sulfure de manganèse selon les revendications 1 et 2, **caractérisé en ce que** l'ester d'acide inorganique est un ester d'acide phosphorique.

5. Sulfure de manganèse selon la revendication 4, **caractérisé en ce que** l'ester d'acide phosphorique est du phosphate de diphényle et de crésyle ou du triphenyl-phosphate.

6. Sulfure de manganèse selon l'une quelconque des revendications 1 ou 2, **caractérisé en ce que** l'huile est une huile de paraffine ou une huile de silicone.

7. Procédé de fabrication de sulfure de manganèse à surface revêtue (MnS), **caractérisé en ce que** l'on part d'un sulfure de manganèse sous forme de poudre, **en ce qu'**un agent de revêtement sélectionné dans le groupe composé d'une cire, d'un ester d'un acide inorganique ou organique, d'un polymère à bas point de fusion, d'un alcool aliphatique monovalent à polyvalent à 2 à 12 atomes de carbone, ou de mélanges de ces derniers est ajouté en une quantité de 0,01 à 10 % en poids sur la base du poids du sulfure de manganèse utilisé, et **en ce que** le mélange est mélangé pendant une durée suffisante pour assurer un mélange homogène.

8. Procédé selon la revendication 7, **caractérisé en ce que** le sulfure de manganèse présente une granulométrie de 1 à 200 µm, de préférence de 1 à 10 µm.

9. Procédé selon l'une quelconque des revendications 7 ou 8, **caractérisé en ce que** l'agent de revêtement est ajouté en une quantité de 0,01 à 5,0 % en poids, de préférence encore de 1,0 % à 3,0 % en poids sur la base du poids du sulfure de manganèse utilisé.

10. Procédé selon l'une quelconque des revendications 7 à 9, **caractérisé en ce que** l'ester d'acide inorganique est un ester d'acide phosphorique.

11. Procédé selon la revendication 10, **caractérisé en ce que** l'ester d'acide phosphorique est du phosphate de diphényle et crésyle ou du triphenyl-phosphate.

12. Utilisation du sulfure de manganèse selon l'une quelconque des revendications 1 à 6 comme additif pour l'amélioration des propriétés de pressage de mélanges de poudre.

13. Utilisation du sulfure de manganèse selon une des revendications 1 à 6 comme additif de poudres de frittage pour l'amélioration de l'usinabilité d'une pièce moulée frittée.

14. Poudre de frittage, **caractérisée en ce qu'**elle contient du sulfure de manganèse selon l'une quelconque des revendications 1 à 6.

15. Procédé de fabrication d'un aggloméré en utilisant la poudre de frittage selon la revendication 14, comprenant les étapes consistant à :
a) comprimer la poudre de frittage dans un moule de frittage qui présente une forme intérieure correspondant au contour final de la pièce moulée finie;
b) chauffer les ébauches à une température supérieure à la température de vaporisation de l'agent de revêtement utilisé pour la fabrication du sulfure de manganèse, et le cas échéant maintenir les ébauches à cette température pendant une période suffisante pour assurer une évaporation complète de l'agent de revêtement ;
c) fritter les ébauches obtenues à l'étape b) ;
d) retirer les pièces moulées refroidies du moule de frittage.
